# FASCICULE DE BREVET EUROPEEN

(11) **EP 2 763 469 B1**
(45) Date de publication et mention de la délivrance du brevet: **28.06.2017**
(21) Numéro de dépôt: 14153291.1
(22) Date de dépôt: 30.01.2014
(51) Int. Cl.: H04W 52/02, H04W 72/04

(54) **PROCÉDÉ DE MODIFICATION DE L'ÉTAT DE POINTS D'ACCÈS LOCAUX DANS UN RÉSEAU CELLULAIRE**
ZUSTANDSVERÄNDERUNGSVERFAHREN DER LOKALEN ZUGANGSPUNKTE IN EIN MOBILFUNKNETZ
METHOD FOR MODIFYING THE STATUS OF LOCAL ACCESS POINTS IN A CELLULAR NETWORK

(30) Priorité: 04.02.2013 FR 1350947
(43) Date de publication de la demande: 06.08.2014
(73) Titulaire: Commissariat à l'Énergie Atomique et aux Énergies Alternatives, 75015 Paris (FR)
(72) Inventeur: Calvanese Strinati, Emilio, 38000 Grenoble (FR); De Domenico, Antonio, 38000 Grenoble (FR); Oueis, Jessica, 38000 Grenoble (FR)
(74) Mandataire: Ilgart, Jean-Christophe

(56) Documents cités:
- FR-A1- 2 964 290
- US-A1- 2009 252 172
- POLLIN S ET AL: "MEERA: Cross-Layer Methodology for Energy Efficient Resource Allocation in Wireless Networks", IEEE TRANSACTIONS ON WIRELESS COMMUNICATIONS, IEEE SERVICE CENTER, PISCATAWAY, NJ, US, vol. 7, no. 1, 1 janvier 2008 (2008-01-01) , pages 98-109, XP011381101, ISSN: 1536-1276, DOI: 10.1109/TWC.2008.05356

## Description

### DOMAINE TECHNIQUE

Le domaine de l'invention est celui des systèmes de communication radio cellulaire.

L'invention vise à réduire la consommation électrique globale d'un tel système, et propose plus particulièrement une méthode permettant de venir modifier de manière dynamique l'état de points d'accès du système en fonction des besoins locaux en termes de trafic.

### ETAT DE LA TECHNIQUE ANTERIEURE

Avec l'émergence de téléphones avancés de type « smartphone » et l'arrivée de nouvelles applications consommatrices de trafic de données, les opérateurs de réseau de télécommunication cellulaire doivent faire face à une montée exponentielle du trafic de données. Ceci a pour conséquence une congestion de plus en plus accrue des cellules du réseau d'accès, et donc une dégradation de la qualité de service offerte aux usagers du réseau.

Une évolution de ces réseaux visant à répondre à ce problème de congestion consiste à y introduire des points d'accès locaux de faible puissance offrant une couverture radio limitée, généralement dédiée pour un usage résidentiel ou en entreprise. Ainsi l'adjonction, aux côtés des stations de base classiques couvrant une macro-cellule dont le rayon s'étend typiquement de 2 km à 35 km, de points d'accès locaux de faible puissance couvrant une petite cellule telle qu'une micro cellule (rayon inférieur à 2 km), une pico-cellule (dont la portée est inférieur à 200 m), ou une femtocellule (portée de l'ordre de 10 m) permet de répondre à cette croissance du trafic. Un exemple se trouve dans FR2946290. Toutefois, du fait de leur faible portée, il est nécessaire de prévoir un déploiement de grande ampleur de ces points d'accès locaux. Et ce déploiement est susceptible d'engendrer une augmentation importante de la consommation énergétique du réseau cellulaire.

De nombreux projets collaboratifs, tels que le projet européen EARTH *(EnergyAware Radio and neTwork tecHnologies),* ont été mis en place pour proposer des modèles de gestion du réseau à même d'en améliorer l'efficacité énergétique en venant éteindre ou forcer en mode de veille certains des noeuds qui forment le réseau cellulaire. Ces modèles exploitent des statistiques de trafic qui correspondent à des moyennes dans le temps et l'espace de demandes de trafic observées dans une région donnée. Toutefois, le trafic est par nature très variable et est caractérisé par d'importantes fluctuations à la fois dans le temps et dans l'espace. L'approche retenue par ces modèles est donc susceptible d'entraîner soit une capacité surdimensionnée, qui affecte l'efficacité énergétique du réseau, soit une capacité spatialement et/ou temporairement sous dimensionnée, qui affecte la qualité de service (QoS pour *Quality Of Service*) offerte aux usagers.

D'autres solutions envisagées pour limiter la consommation énergétique consistent à gérer de manière dynamique les stations de base, ou à les partager entre différents opérateurs. On connaît ainsi une technique qui permet aux stations de base présentant une faible charge d'interrompre leurs fonctionnalités de transmission. Cette solution n'apparait toutefois pas satisfaisante car elle peut engendrer une dégradation excessive du niveau de signal lorsque suite à l'interruption de la station de base avec laquelle un terminal d'usager était associé le terminal se retrouve en liaison avec plusieurs nouvelles stations de base.

D'autres techniques visant à limiter la consommation énergétique s'intéressent plus spécifiquement aux points d'accès locaux de faible puissance. Il a ainsi été proposé de venir dynamiquement interrompre les fonctionnalités de transmission d'un tel point d'accès local lorsque le trafic est faible. On connaît ainsi de l'article "Optimal control of wake up mechanisms of femtocells in heterogeneous networks" de L. Saker et al. IEEE JSAC, Vol. 30, N°3, Avril 2012, pp. 664-672, une technique visant à réaliser un déport du trafic à absorber par une station de base couvrant une macro-cellule vers des points d'accès locaux présents dans la macrocellule et couvrant chacun une microcellule. Cette technique consiste d'une manière générale à ce que les points d'accès locaux soient mis en veille lorsque la macrocellule est peu chargée et que la station de base peut absorber le trafic tout en offrant aux usagers une Qualité de Service satisfaisante. En revanche, lorsque la charge augmente, un ou plusieurs points d'accès locaux sont activés, en fonction de la charge et de la localisation du trafic. Ce mécanisme d'activation/mise en veille est contrôlé de manière centralisé par la station de base, sur la base d'informations dont elle dispose à propos de la charge demandée par chaque utilisateur sur chaque point d'accès local et sur la station de base, et de la localisation du trafic.

Si cette approche apparaît intéressante, il n'en reste pas moins qu'elle repose sur l'exploitation par la station de base d'une information sur la charge demandée par chacun des usagers présents dans la macro-cellule. Or une telle information de charge peut être relativement difficile à recueillir car il s'agit d'une estimation dans le futur qui dépend de la manière dont les ressources sont allouées à un utilisateur, des retransmissions éventuellement nécessaires, de l'évolution du trafic de l'usager dans le temps, et donc de l'évolution de sa charge. Le mode d'obtention de cette information de charge n'est d'ailleurs pas précisé dans l'article susvisé.

Il s'agit en outre d'une approche centralisée qui nécessite un canal de retour pour faire de la signalisation et donner à la station de base centrale les informations nécessaires à la prise de décision, ainsi que la mise en place d'un mécanisme de scrutation (*polling*) pour commander les points d'accès locaux. D'autres problèmes liés à une approche centralisée sont la latence et le manque de flexibilité du système.

### EXPOSÉ DE L'INVENTION

L'invention a pour objectif de remédier au moins partiellement aux inconvénients mentionnés ci-dessus, relatifs aux réalisations de l'art antérieur. Elle vise en particulier à améliorer l'efficacité énergétique d'un réseau cellulaire, sans pour autant venir dégrader la qualité de service offerte aux usagers du réseau , au moyen d'une technique apparentée à celle exposée dans l'article susvisée en ce sens qu'elle repose sur une modification dynamique des fonctionnalités de transmission de points d'accès locaux.

L'invention propose pour ce faire un procédé d'allocation de ressources dans un réseau de communication radio cellulaire comprenant une pluralité d'équipements d'usagers et une grappe constituée d'au moins un point d'accès local au réseau couvrant une microcellule , comprenant les étapes suivantes:
- pour chaque point d'accès local de la grappe:
   ▪ détermination de la présence d'équipements d'usagers dans une zone de couverture de la microcellule associée au point d'accès local ;
   ▪ élaboration d'un message de couverture local spécifiant les équipements dont il est déterminé qu'ils sont présents dans la zone de couverture de la microcellule ;
- élaboration d'un message de couverture global par agrégation du message de couverture local de chaque point d'accès local de la grappe;
- modification d'au moins un paramètre de fonctionnement d'au moins un point d'accès local de la grappe en fonction du message de couverture global ;
caractérisé en ce qu'il comporte, pour chaque point d'accès local de la grappe, les étapes consistant, pour chacun des équipements d'usagers spécifiés dans le message de couverture local, à:
- déterminer un état d'activité de l'équipement d'usager;
- renseigner en conséquence un champ dudit message de couverture local représentatif de l'activité de l'équipement.

En venant exploiter des informations de localisation et d'état d'activité des équipements d'usagers, ce procédé identifie dynamiquement quels sont les usagers qui nécessitent des ressources, ce qui permet d'activer/désactiver certaines fonctionnalités de points d'accès locaux de manière à allouer localement des ressources là où des usagers nécessitent effectivement des ressources. L'exploitation d'une information d'état d'activité des équipements d'usagers qui repose par exemple sur une classification des besoins en termes d'échange de données de charge utile et/ou d'échange de données de signalisation s'avère en outre plus simple à mettre en oeuvre que la détermination de la charge effectivement demandée par chacun des équipements d'usagers.

Ce procédé présente en outre l'avantage de pouvoir être mis en oeuvre dans différentes types d'architecture de réseau. Il n'est effectivement pas limité à l'architecture centralisée selon l'article susvisé où les points d'accès locaux sont présents dans la macrocellule de la station de base et sont utilisés pour réaliser un déport du trafic à absorber par la station de base. Il peut au contraire être mis en oeuvre sans la présence d'une telle station de base (même si l'invention s'étend également à ce cas) et s'étend ainsi à des architectures décentralisées dans lesquelles des points d'accès locaux sont par exemple regroupés en grappes (l'un des points d'accès locaux d'une grappe, ou un équipement dédié, servant de coordinateur pour les points d'accès locaux de la grappe) ou des architectures distribuées dans laquelle est mise en oeuvre une coopération entre points d'accès locaux.

Certains aspects préférés mais non limitatifs de procédé sont les suivants :
- l'état d'activité d'un équipement d'usager est un état parmi les états suivants :
   - un état actif dans lequel l'équipement nécessite l'échange de données de signalisation et de données de charge utile avec le réseau, ou
   - un état de veille dans lequel l'équipement ne nécessite que l'échange de données de signalisation avec le réseau, ou
   - un état inactif dans lequel l'équipement ne nécessite ni l'échange de données de charge utile ni l'échange de données de signalisation avec le réseau ;
- la modification d'au moins un paramètre de fonctionnement d'un point d'accès local de la grappe comprend l'activation, la mise en veille ou la désactivation du point d'accès local ;
- un équipement d'usager est déterminé comme étant présent dans une zone de couverture de la microcellule associée à un point d'accès local lorsqu'il est apte à échanger des données avec ledit point d'accès avec un niveau de Qualité de Service donné ;
- le procédé est mis en oeuvre pour deux zones de couverture de la microcellule associée à un point d'accès local, à savoir une première zone de couverture pour l'échange de données avec le point d'accès respectant un premier niveau de Qualité de Service et une seconde zone de couverture pour l'échange de données avec le point d'accès respectant un second niveau de Qualité de Service ;
- le premier le niveau de Qualité de Service est un niveau pour l'échange de données de charge utile et le second niveau de Qualité de Service est un niveau pour l'échange de données de signalisation ;
- la grappe est constituée d'un seul point d'accès local ;
- le réseau comprend une pluralité de points d'accès locaux répartis en au moins une grappe de points d'accès local, et le procédé comprend l'élaboration d'un message de couverture global pour chaque grappe de points d'accès locaux, et, pour chaque grappe de points d'accès locaux, la modification en fonction du message de couverture global correspondant d'au moins un paramètre de fonctionnement d'au moins un point d'accès local de la grappe ;
- ladite pluralité de points d'accès locaux est présente dans une macrocellule associée à une station de base du réseau ;
- le procédé comprend en outre, pour chaque point d'accès local, les étapes consistant, pour chacun des équipements d'usagers spécifiés dans le message de couverture local, à:
   - déterminer une information de contexte d'utilisation de l'équipement ;
   - renseigner en conséquence un champ dudit message de couverture local représentatif du contexte d'utilisation.

### BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :
- la figure 1 est un schéma représentant un réseau de communication radio cellulaire comportant plusieurs points d'accès locaux couvrant chacun une microcellule ;
- la figure 2 est un schéma illustrant un mode de réalisation possible de l'invention dans lequel une microcellule associée à un point d'accès local présente différentes zones de couverture.

### EXPOSÉ DÉTAILLÉ DE MODES DE RÉALISATION PRÉFÉRÉS

L'invention porte sur un procédé d'allocation de ressources dans un réseau de communication radio cellulaire comprenant une pluralité d'équipements d'usagers et une grappe constituée d'au moins un point d'accès local au réseau couvrant une microcellule.

Par point d'accès local couvrant une microcellule, on entend tout équipement de puissance faible ou modérée offrant une couverture radio limitée, généralement dédiée pour un usage résidentiel ou en entreprise. Le terme de microcellule est utilisé pour démarquer le point d'accès local conforme à l'invention d'une station de base classique qui couvre, elle, une macro-cellule. Un point d'accès local selon l'invention couvre ainsi une microcellule dont le rayon est typiquement inférieur à 2 km, et cette microcellule doit être comprise comme pouvant également être une picocellule, une femtocellule ou une cellule couverte par un relais radio local.

Une grappe peut ne compter qu'un seul point d'accès local. Elle peut bien évidemment compter une pluralité de points d'accès locaux, par exemple un sous-ensemble des points d'accès locaux présents dans une macro cellule couverte par une station de base du réseau, voire l'ensemble des points d'accès locaux présents dans la macro cellule.

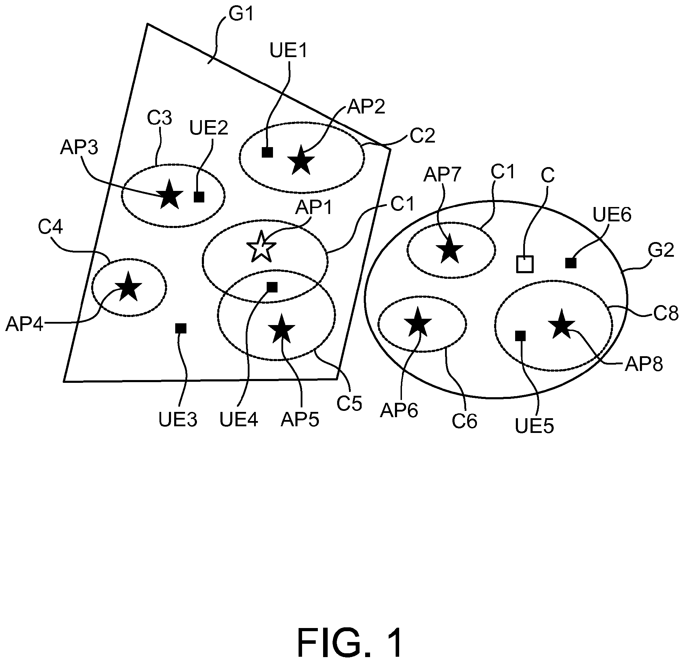

En référence à la figure 1, on a représenté un exemple de réseau de communication dans lequel le procédé d'allocation de ressources selon l'invention peut être exécuté. Le réseau comporte plusieurs points d'accès locaux AP1-AP8 couvrant chacun une microcellule C1-C8 et dans lequel on retrouve un ensemble d'équipements d'usagers UE1-UE6.

Dans l'exemple de réalisation illustré sur la figure 1, les points d'accès locaux AP1-AP8 sont répartis en deux grappes G1, G2 de points d'accès locaux. On retrouve plus précisément les points d'accès locaux AP1-AP5 dans la première grappe G1, et les points d'accès locaux AP6-AP8 dans la seconde grappe. Dans chacune de ses grappes G1, G2, un équipement joue un rôle de coordinateur : l'un des points d'accès locaux AP1 dans la première grappe G1, un équipement dédié C dans la seconde grappe G2.

### Détermination de la présence d'équipements d'usagers dans une zone de couverture des points d'accès locaux

Le procédé selon l'invention comporte une première étape visant à déterminer la présence d'équipements d'usagers à proximité des points d'accès locaux. Cette étape consiste plus précisément, pour chaque point d'accès local AP1-AP8 à déterminer la présence des équipements d'usagers T1-T6 dans une zone de couverture C1-C8 de la microcellule associée au point d'accès local AP1-AP8. Dans l'exemple de la figure 1, la zone de couverture correspond à l'ensemble de la microcellule.

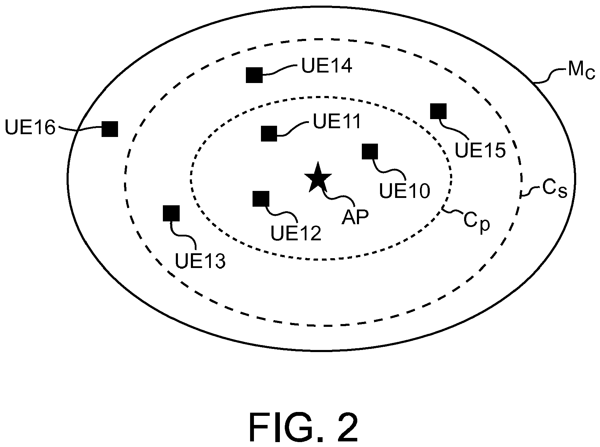

En référence à la figure 2, l'invention s'étend également à une zone de couverture réduite Cp, CS ne correspondant qu'à une partie de la microcellule Mc associée à un point d'accès local AP, une zone de couverture réduite assurant typiquement un niveau de Qualité de Service donné que la périphérie de la microcellule ne peut assurer pour un échange de données entre un équipement d'usager présent dans la zone de couverture réduite et le point d'accès local.

L'invention s'étend également à la définition de plusieurs zones de couverture au sein d'une microcellule, ces différentes zones assurant typiquement différents niveaux de Qualité de Service, par exemple deux zones de couverture dont l'une Cp assure un niveau de Qualité de Service pour l'échange de données de charge utile et l'autre Cs assure un niveau de Qualité de Service pour l'échange de données de signalisation.

Revenant à la figure 1, cette première étape permet de déterminer la présence de l'équipement d'usager UE1 dans la zone de couverture C2 du point d'accès local AP2, la présence de l'équipement d'usager UE2 dans la zone de couverture C3 du point d'accès local AP3 et la présence de l'équipement d'usager UE4 dans les zones de couverture respectives C1, C5 des points d'accès locaux AP1, AP5, et la présence de l'équipement d'usager UE5 dans la zone de couverture C8 du point d'accès local AP8.

S'agissant de l'exemple illustré sur la figure 2, cette première étape permet de déterminer la présence des équipements d'usager UE10-UE12 dans la zone de couverture Cp du point d'accès local AP et la présence des équipements d'usager UE10-UE15 dans la zone de couverture Cs du point d'accès local AP.

Cette première étape peut être réalisée de diverses manières en exploitant des techniques connues par ailleurs.

Dans une première variante, cette première étape de détermination de présence dans une zone de couverture d'un point d'accès local est réalisée par le point d'accès local.

Cette première étape peut comprendre la réception par le point d'accès local d'un message indicatif de la présence d'un équipement d'usager dans la zone de couverture du point d'accès local. Le message peut être un message explicite de présence de l'usager (celui-ci coopérant donc au mécanisme de détection en venant déclarer sa présence). Il peut également s'agir d'un message implicite pour lequel des opérations de traitement de signal sont mises en oeuvre afin d'en extraire l'information relative à la présence de l'équipement d'usager dans la zone de couverture. La détection d'un usager peut également être réalisée par un autre usager qui se trouve à proximité et qui vient ensuite transférer cette information au point d'accès local.

Alternativement, cette première étape peut comprendre la détection par le point d'accès local de la présence de l'équipement d'usager dans la zone de couverture. Le point d'accès local peut à cet effet être équipé d'un détecteur d'énergie permettant de sentir la présence d'équipements d'usagers dans leur entourage.

Dans une deuxième variante, cette première étape peut être réalisée par le coordinateur d'une grappe de points d'accès locaux, tels que le point d'accès AP1 pour la première grappe G1, et l'équipement dédié C pour la seconde grappe G2 dans l'exemple de la figure 2. Dans une troisième variante, cette première étape peut être réalisée par une station de base couvrant une macro-cellule dans laquelle on retrouve les différents points d'accès. Les mécanismes de détermination de présence évoqués ci-dessus par réception de déclaration de présence ou par détection de présence restent applicables dans ces variantes.

A titre d'exemples illustratifs, on peut citer les modes de réalisation suivants de la détermination de présence.

Selon un mode de réalisation, la première étape exploite des techniques de radio cognitive, par exemple comme décrit dans "A Survey on MAC Strategies for Cognitive Radio Networks," de De Domenico, A.; Calvanese Strinati, E.; Di Benedetto, M.-G.; IEEE Communications Surveys & Tutorials, vol.14, no.1, pp.21-44, First Quarter 2012.

Selon un autre mode de réalisation, cette étape exploite des indicateurs de qualité de canal qui sont constamment échangés entre les points d'accès locaux actifs et les équipements d'usagers qui y sont connectés. Un équipement d'usager sera détecté comme étant présent dans une zone de couverture du point d'accès local si un échange de données peut être réalisé avec un niveau de service requis, ce que des calculs exploitant les indicateurs de qualité de canal permettent de savoir. On retrouve là le mécanisme classique mis en oeuvre pour déterminer si un utilisateur est dans le rayon de couverture d'une station de base cellulaire et selon lequel toutes les stations de base transmettent périodiquement des messages pilotes qui sont utilisé pour permettre les processus d'identification, synchronisation, et ainsi d'évaluer la qualité du lien. A titre d'exemple, un équipement usager informe la station de base ou son point d'accès local de la qualité de lien observée lors du ou des derniers échanges de données. Coté point d'accès, le mécanisme d'adaptation de lien (*link adaptation*) associé a cette qualité de lien, éventuellement pondérée par d'autres informations comme le nombre de retransmissions du même paquet, le niveau d'interférence, etc., permet de sélectionner le schéma de modulation et de codage (MCS pour *Modulation and Coding Scheme*) approprié. Ce MCS permet de vérifier la qualité de service offerte en termes de débit à l'usager et ainsi de détecter s'il se trouve ou non dans une zone de couverture associée au point d'accès local.

Selon encore un autre mode de réalisation, cette étape exploite des informations de localisation GPS fournies par les équipements d'usager.

Selon encore un autre mode de réalisation, cette étape exploite le fait que les équipements d'usagers viennent déclarer leur position lorsqu'ils changent d'état d'activité. Par exemple, l'équipement d'usager utilise une radio courte portée (par exemple Bluetooth) pour communiquer avec un autre équipement d'usager ou un point d'accès qui a la même radio. Cette radio à courte portée est généralement différente de celle qui est utilisée pour l'échange d'informations. Pour plus de details, on peut se reporter à: R3-110030, "Dynamic H(e)NB Switching by Means of a Low Power Radio Interface for Energy Savings and Interference Reduction," 3GPP TSG RAN WG3 Meeting, Dublin, Ireland, January 2011.

Selon encore un autre mode de réalisation, et comme déjà évoqué précédemment, cette étape peut être mise en oeuvre par des points d'accès locaux équipés de détecteur d'énergie pour sentir la présence d'équipements d'usagers dans leur entourage.

Selon encore un autre mode de réalisation, un coordinateur a accès à une base de données qui recense la position de tous les points d'accès du réseau cellulaire. L'information donnée par cette base de données base est alors utilisée conjointement avec une information de présence/localisation de l'équipement d'usager pour établir dans quelles zones de couverture l'équipement d'usager se trouve.

Selon encore un autre mode de réalisation, les points d'accès locaux voisins (par exemple les points d'accès d'une même grappe, ou encore les points d'accès en couverture de communication radio, ou encore les points d'accès en voisinage géographique, etc.) partagent les informations récoltées sur la présence (et l'état d'activité comme on le verra par la suite) des équipements d'usager dans leur(s) zone(s) de couverture, ce qui s'avère avantageux dans la mesure où des équipements d'usagers, tels que l'équipement UE4 sur la figure 1, peuvent se trouver dans la zone de couverture C1, C5 de plusieurs points d'accès locaux AP1, AP5. Il s'avère en outre possible de mener une action planifiée au niveau d'une grappe de points d'accès locaux où la connaissance de l'état d'activité de la population des équipements d'usagers peut être exploitée par plusieurs algorithmes d'allocation de ressources coopératifs.

Selon encore un autre mode de réalisation, cette étape de localisation peut exploiter des modèles de mobilité qui permettent de prédire une localisation future des équipements d'usagers à partir de leurs localisations passées. On peut par exemple se reporter à : Burgard, W.; Derr, A.; Fox, D.; Cremers, A.B., "Integrating global position estimation and position tracking for mobile robots: the dynamic Markov localization approach," Intelligent Robots and Systems, 1998. Proceedings., 1998 IEEE/RSJ International Conference on, vol.2, no., pp.730-735 vol.2, 13-17 Oct 1998.

On relèvera que l'on peut remplacer les modèles de mobilité par un mécanisme adaptatif comme le filtre de Kalman, ou que l'on peut également utiliser des informations statistiques (par exemple les habitudes de l'utilisateur, comme son trajet pour se rendre sur son lieu de travail) et des informations sur la localisation passée pour prévoir la position future.

### Classification de l'état d'activité des équipements d'usagers

Selon une seconde étape, le procédé selon l'invention comporte une étape visant à classer en fonction de leur activité les équipements d'usagers déterminés comme étant présents dans la zone de couverture de la microcellule associé à un point d'accès local (ces équipements sont spécifiés dans le message de couverture local comme cela sera détaillé par la suite). Il s'agit plus précisément de discriminer entre les équipements qui ne nécessitent pas de ressources du réseau, et ceux qui en nécessitent soit parce qu'ils sont actifs soit parce qu'ils sont susceptibles de le devenir.

Cette seconde étape consiste, pour chaque point d'accès local, et pour chaque équipement d'usager détecté comme étant présent dans la zone de couverture de la microcellule associé au point d'accès local, à déterminer un état d'activité de l'équipement d'usager, par exemple un état d'activité parmi les états d'activité suivants :
- un état actif dans lequel l'équipement nécessite l'échange de données de signalisation et de données de charge utile (par exemple des fichiers, de la vidéo sur demande ou de la voix) avec le réseau, ou
- un état de veille dans lequel l'équipement ne nécessite que l'échange de données de signalisation (par exemple, certains messages de paging) avec le réseau (l'équipement est alors susceptible de devenir actif), ou
- un état inactif dans lequel l'équipement ne nécessite ni l'échange de données de charge utile ni l'échange de données de signalisation avec le réseau.

Cette étape de classification peut être réalisée de diverses manières. A titre d'exemples illustratifs, on peut citer les modes de réalisation suivants.

Selon un mode de réalisation, cette étape met en oeuvre une prédiction de l'état d'activité des équipements d'usagers. Par exemple, les équipements d'usagers qui présentent de manière régulière un schéma de trafic donné (tel que détecté par exemple par des capteurs) ou un comportement donné (tel que déterminé par des informations délivrées par des applications de surveillance du contexte d'utilisation de l'équipement d'usager) peuvent être classifiés de manière correspondante.

Un exemple de schéma de trafic donné permettant de construire un modèle de prédiction d'état d'activité repose sur le fait que l'usage d'un équipement d'usager est très répétitif (consultation des journaux tous les matins par exemple). Cet usage dépend en outre du contexte dans lequel l'usager se trouve (s'il est au travail ou s'il marche par exemple, il ne va pas générer une charge importante pour le réseau ; a contrario au cours d'un déplacement en train, une charge importante peut être générée pour de la vidéo à la demande). Et une application de surveillance du contexte d'utilisation peut par exemple permettre de réaliser une capture de contexte (par exemple détecter que l'usager consulte une application de cartographie alors qu'il se trouve dans le métro) pouvant être exploitée pour prédire l'état d'activité.

Selon un autre mode de réalisation, cette étape exploite un temporisateur d'état d'activité. Ainsi par exemple, les équipements d'usagers qui ne transmettent pas de données pendant une longue période sont classifiés comme étant en veille ou inactifs.

Selon un autre mode de réalisation, cette étape exploite une pro-activité des équipements d'usagers consistant par exemple à ce que les équipements en veille transfère explicitement des information relatives à un trafic attendu, ce qui permet d'estimer leur activité future. Dans une variante, un équipement d'usager peut être proactif en ce qu'il peut demander à activer un point d'accès local particulier après avoir exploité des informations passées relatives à la Qualité de Service. Ou encore, un équipement d'usager classifié comme étant en veille ou inactifs peut déclarer son changement d'activité de façon explicite à travers la transmission d'un message dans un créneau spécifique de la trame radio.

### Elaboration d'un message de couverture local

Le procédé selon l'invention comporte une étape consistant à élaborer, pour chaque point d'accès local, un message de couverture local spécifiant les équipements d'usagers identifiés comme étant présents dans une zone de couverture de la microcellule.

Dans le cadre de l'invention, cette étape comporte en outre le fait de venir renseigner, pour chacun des équipements d'usagers spécifiés dans le message de couverture local, en fonction du résultat de la détection de l'état d'activité (actif/en veille/inactif) de l'équipement, un champ dudit message de couverture local représentatif de l'activité de l'équipement.

Prenant l'exemple de la figure 2, cette étape fournit un premier message de couverture local relatif à la zone de couverture Cp assurant un niveau de Qualité de Service pour l'échange de données de charge utile dans lequel on retrouve les équipements UE10-UE12 et leur état d'activité respectif. Elle fournit également un second message de couverture local relatif à la zone de couverture Cs assurant un niveau de Qualité de Service pour l'échange de données de signalisation dans lequel on retrouve les équipements UE10-UE15 et leur état d'activité respectif.

Dans une variante, l'étape de classification de l'état d'activité des équipements d'usager présents dans une zone de couverture d'un point d'accès local peut être accompagnée d'une étape de détermination d'une information de contexte d'utilisation desdits équipements. Pour chacun de ces équipements, un autre champ dudit message de couverture local (champ représentatif du contexte d'utilisation) peut alors être renseigné, en complément du champ représentatif de l'activité de l'équipement, pour y porter ladite information de contexte d'utilisation. A titre d'exemple illustratif, l'information de contexte peut être indicatrice du fait que l'équipement se trouve à l'intérieur d'un bâtiment ou à l'extérieur. La modification de paramètres de fonctionnement de points d'accès locaux pourra alors prendre en compte le fait que l'équipement à l'intérieur du bâtiment présente une mobilité réduite. L'information de contexte peut également être indicatrice du fait que l'usager se trouve dans une zone dédiée aux divertissements, et qu'il est dès lors enclin à consommer des données multimédia.

### Elaboration d'un message de couverture global

Le procédé selon l'invention comporte par ailleurs une étape d'élaboration d'un message de couverture global par agrégation du message de couverture local de chaque point d'accès local appartenant à une grappe constituée d'au moins un point d'accès local.

Dans un premier cas de figure, la grappe est constituée d'un seul point d'accès local. On comprend que le message de couverture global est alors identique au message de couverture local.

Dans un deuxième cas de figure, la grappe est constituée de deux ou plus points d'accès locaux qui s'échangent leurs messages de couverture local via un lien radio ou filaire et qui chacun élabore le message de couverture global et dispose ainsi d'une vision plus complète de leur environnement.

Dans un troisième cas de figure, la grappe est constituée de deux ou plus points d'accès locaux qui font remonter leurs messages de couverture local via un lien radio ou filaire vers un coordinateur de la grappe (l'un des points d'accès ou un équipement dédit) qui se charge d'élaborer le message de couverture global. Dans le cas où la grappe est constituée par l'ensemble des points d'accès présents dans une macrocellule, le coordinateur pourra être un contrôleur de la station de base associée à la macrocellule.

Dans la mesure où chaque message de couverture local dispose de l'information sur l'état d'activité de chaque équipement présent dans la zone de couverture associé à un point d'accès local (le cas échéant accompagnée d'une information de contexte), on retrouve également cette information dans le message de couverture global (ainsi le cas échéant que l'information de contexte).

Les étapes précédemment décrites l'ont été en liaison avec des points d'accès locaux. Dans un mode de réalisation possible de l'invention, ces étapes précédemment décrites sont également réalisées pour une ou plusieurs stations de base (chacune couvrant une macrocellule) du réseau, par exemple pour une station de base dans la macrocellule de laquelle sont présents les points d'accès locaux. Dans un tel cas de figure, le message de couverture global, comporte pour chaque station de base (macrocellule) et chaque point d'accès local (microcellule) l'indication des équipements présents dans la cellule (macro ou micro) et leur état d'activité (actif/en veille/inactif).

### Modification de l'allocation de ressources

Dans une dernière étape, le procédé selon l'invention vient modifier, en fonction du message de couverture global, et afin d'améliorer l'efficacité énergétique du réseau au moins un paramètre de fonctionnement d'au moins un point d'accès local.

Dans le premier cas de figure mentionné ci-dessus, les points d'accès locaux agissent indépendamment les uns des autres et décident eux-mêmes de modifier ou non l'un au moins de leurs paramètres de fonctionnement.

Dans les deuxièmes et troisièmes cas de figure, le traitement du message de couverture global est réalisé de manière centralisée par le coordinateur d'une grappe ou le contrôleur de la station de base, ou d'une manière distribuée par les points d'accès locaux eux-mêmes, qui peuvent élaborer une stratégie commune pour satisfaire la demande des utilisateurs.

Dans un mode de réalisation particulier, la modification d'au moins un paramètre de fonctionnement d'un point d'accès local comprend l'activation, la mise en veille ou la désactivation du point d'accès local.

Dans un mode de réalisation, le paramètre de fonctionnement est choisi en fonction d'une échelle de temps (typiquement court, moyen ou long terme) sur laquelle on souhaite que l'efficacité énergétique du réseau soit améliorée. L'effet sur l'efficacité énergétique de la modification d'un paramètre de fonctionnement dépend effectivement de cette échelle de temps, dans la mesure notamment où lorsqu'une telle modification est opérée, il faut attendre un certain temps avant de pouvoir la réaliser à nouveau. La modification d'un paramètre de fonctionnement sur une échelle court terme offre en général plus de flexibilité, mais consomme plus d'énergie qu'une modification sur échelle long terme. A titre d'exemple, un point d'accès local peut présenter deux modes de veille : une veille légère et une veille profonde. La veille profonde consomme moins d'énergie que la veille légère, mais un réveil depuis la veille légère ne prend que quelque micro secondes alors qu'un réveil depuis la veille profonde est nettement plus long.

Ainsi, parmi les méthodes qui peuvent améliorer l'efficacité énergétique du réseau, on trouve des méthodes qui agissent dans une échelle temporelle proche du temps de cohérence du canal radio. En particulier ces méthodes adaptent l'usage de ressources radio (antennes, bande de fréquence, puissance et temps de transmission) en fonction de la charge du réseau. On peut par exemple se reporter à :
- T. Chen, Y. Yang, H. Zhang, H. Kim, K. Horneman, Network energy saving technologies for green wireless access networks, IEEE Wireless Communications 18 (5) (2011) 30-38;
- EARTH, Project Deliverable D4.3, Final Report on Green Radio Technologies, https://www.ict-earth.eu/publications/deliverables/deliverables.html, 2012;
- D. Ng, E. Lo, R. Schober, Energy-Efficient Resource Allocation in OFDMA Systems with Large Numbers of Base Station Antennas, IEEE Transactions on Wireless Communications, (99) (2012) 1-13.

D'autres méthodes adaptent le réseau aux changements lents de la charge radio (de l'ordre des heures, jours, etc.). Le profil de charge de réseaux montre un comportement périodique selon lequel la charge est faible tôt le matin et augmente pendant la journée. D'une manière générale, ces méthodes consistent à adapter le nombre de points d'accès activés dans une région donnée à un instant donné. On peut par exemple se reporter à :
- Z. Niu, Y. Wu, J. Gong, Z. Yang, Cell zooming for cost-efficient green cellular networks, IEEE Communications Magazine 48 (11) (2010) 74-79 ;
- Z. Niu, S. Zhou, Y. Hua, Q. Zhang, D. Cao, Energy-Aware Network Planning for Wireless Cellular System with Inter-Cell Cooperation, IEEE Transactions on Wireless Communications 11 (4) (2012) 1412-1423;
- A. Conte, A. Feki, L. Chiaraviglio, D. Ciullo, M. Meo, M. Marsan, Cell wilting and blossoming for energy efficiency, IEEE Wireless Communications 18 (5) (2011) 50-57.

Enfin, des méthodes agissant sur des échelles temporelles encore plus plus grandes peuvent être mises en oeuvre par l'operateur du réseau suite à l'augmentation progressive de la demande des services radios. Ces méthodes incluent le déploiement de nouveaux points d'accès, l'installation de nouveaux matériels ou l'acquisition de nouvelles bandes de fréquence.

Dans un mode de réalisation, on vient évaluer le coût lié à la modification d'un paramètre de fonctionnement. On peut par exemple calculer une fonction de coût qui prend en compte, par exemple sous la forme d'une somme pondérée, les coûts liés à l'impact de cette modification sur un ensemble de caractéristiques de la transmission du point d'accès local tels qu'un coût relatif à une réduction du débit, à une augmentation du délai, à une augmentation de la gigue, à une augmentation de la perte de paquet, à une augmentation d'un temps de transition entre états d'activité, à une augmentation de l'énergie transitoire consommée lors d'une telle transition, etc.

Dans un autre mode de réalisation, on vient évaluer le bénéfice lié à la modification d'un paramètre de fonctionnement sur la consommation d'énergie du système. On peut par exemple calculer une fonction bénéfice, qui correspond par exemple à une somme pondérée du gain en matière d'efficacité énergétique pour différents composants du réseau.

Afin de réduire la consommation d'énergie globale du réseau cellulaire, l'invention propose d'adapter l'offre et la demande de ressources localement, en venant modifier dynamiquement l'état de fonctionnement de points d'accès locaux en exploitant pour cela des informations de localisation des usagers associées à des informations sur l'état d'activité des équipements d'usagers

Plus particulièrement, les équipements d'usagers inactifs sont transparents pour le réseau, de sorte que la gestion de la mobilité, la transmission de symboles de références, et l'accès aléatoire ne sont pas nécessaires pour eux. Par ailleurs, la gestion de mobilité d'équipements d'usagers en veille ne nécessite que la mise à jour des messages de couverture, tandis que les symboles de référence ne sont transmis qu'aux équipements d'usagers actifs.

En outre, en exploitant les informations de localisation, le réseau peut forcer l'association d'un ensemble équipements d'usagers actifs avec un point d'accès local considéré momentanément comme le meilleur candidat, et ce de manière à limiter la surcharge du réseau et sa consommation électrique, et à limiter les interférences et les sources de radiation électromagnétiques.

## Revendications

1. Procédé d'allocation de ressources dans un réseau de communication radio cellulaire comprenant une pluralité d'équipements d'usagers (UE1-UE6, UE10-UE16) et une grappe constituée d'au moins un point d'accès local (AP1-AP8, AP) au réseau couvrant une microcellule (Mc), comprenant les étapes suivantes:
- pour chaque point d'accès local (AP1-AP8, AP) de la grappe:
▪ détermination de la présence d'équipements d'usagers (T1-T6) dans une zone de couverture (C1-C8, Cp, Cs) de la microcellule associée au point d'accès local (AP1-AP8, AP) ;
▪ élaboration d'un message de couverture local spécifiant les équipements dont il est déterminé qu'ils sont présents dans la zone de couverture de la microcellule ;
- élaboration d'un message de couverture global par agrégation du message de couverture local de chaque point d'accès local de la grappe;
- modification d'au moins un paramètre de fonctionnement d'au moins un point d'accès local de la grappe en fonction du message de couverture global ;
**caractérisé en ce qu'**il comporte, pour chaque point d'accès local de la grappe, les étapes consistant, pour chacun des équipements d'usagers spécifiés dans le message de couverture local, à:
- déterminer un état d'activité de l'équipement d'usager;
- renseigner en conséquence un champ dudit message de couverture local représentatif de l'activité de l'équipement.

2. Procédé selon la revendication 1, dans lequel l'état d'activité d'un équipement d'usager est un état parmi les états suivants :
- un état actif dans lequel l'équipement nécessite l'échange de données de signalisation et de données de charge utile avec le réseau, ou
- un état de veille dans lequel l'équipement ne nécessite que l'échange de données de signalisation avec le réseau, ou
- un état inactif dans lequel l'équipement ne nécessite ni l'échange de données de charge utile ni l'échange de données de signalisation avec le réseau.

3. Procédé selon la revendication 1, dans lequel la modification d'au moins un paramètre de fonctionnement d'un point d'accès local de la grappe comprend l'activation, la mise en veille ou la désactivation du point d'accès local.

4. Procédé selon l'une des revendications 1 à 3, dans lequel un équipement d'usager est déterminé comme étant présent dans une zone de couverture de la microcellule associée à un point d'accès local lorsqu'il est apte à échanger des données avec ledit point d'accès avec un niveau de Qualité de Service donné.

5. Procédé selon l'une des revendications 1 à 4, **caractérisé en ce qu'**il est mis en oeuvre pour deux zones de couverture de la microcellule associée à un point d'accès local, à savoir une première zone de couverture (Cp) pour l'échange de données avec le point d'accès respectant un premier niveau de Qualité de Service et une seconde zone de couverture (Cs) pour l'échange de données avec le point d'accès respectant un second niveau de Qualité de Service.

6. Procédé selon la revendication 5, dans lequel le premier le niveau de Qualité de Service est un niveau pour l'échange de données de charge utile et le second niveau de Qualité de Service est un niveau pour l'échange de données de signalisation.

7. Procédé selon l'une des revendications 1 à 6, dans lequel la grappe est constituée d'un seul point d'accès local.

8. Procédé selon l'une des revendications 1 à 6, dans lequel le réseau comprend une pluralité de points d'accès locaux répartis en au moins une grappe de points d'accès local, comprenant l'élaboration d'un message de couverture global pour chaque grappe de points d'accès locaux, et, pour chaque grappe de points d'accès locaux, la modification en fonction du message de couverture global correspondant d'au moins un paramètre de fonctionnement d'au moins un point d'accès local de la grappe.

9. Procédé selon la revendication 8, dans lequel ladite pluralité de points d'accès locaux est présente dans une macrocellule associée à une station de base du réseau.

10. Procédé selon l'une des revendications précédentes, comprenant en outre, pour chaque point d'accès local, les étapes consistant, pour chacun des équipements d'usagers spécifiés dans le message de couverture local, à:
- déterminer une information de contexte d'utilisation de l'équipement ;
- renseigner en conséquence un champ dudit message de couverture local représentatif du contexte d'utilisation.

## Patentansprüche

1. Verfahren zur Ressourcenallokation in einem zellulären Funkkommunikationsnetz, umfassend eine Mehrzahl von Benutzergeräten (UE1-UE6, UE10-UE16) sowie ein Cluster, das durch wenigstens einen lokalen Zugangspunkt (AP1-APB, AP) zu dem Netz gebildet ist, der eine Mikrozelle (Mc) abdeckt, umfassend die folgenden Schritte:
- für jeden lokalen Zugangspunkt (AP1-APB, AP) des Clusters:
▪ Bestimmen des Vorhandenseins von Benutzergeräten (T1-T6) in einer Abdeckungszone (C1-C8, Cp, Cs) der Mikrozelle, die dem lokalen Zugangspunkt (AP1-APB, AP) zugeordnet ist;
▪ Erstellen einer Lokalabdeckungsnachricht, die die Geräte spezifiziert, von denen bestimmt wird, dass sie in der Abdeckungszone der Mikrozelle vorhanden sind;
- Erstellen einer Globalabdeckungsnachricht durch Aggregation der Lokalabdeckungsnachricht jedes lokalen Zugangspunkts des Clusters;
- Modifizieren wenigstens eines Funktionsparameters wenigstens eines lokalen Zugangspunkts des Clusters als Funktion der Globalabdeckungsnachricht; **dadurch gekennzeichnet, dass** es für jeden lokalen Zugangspunkt des Clusters die folgenden Schritte für jedes der Benutzergeräte umfasst, die in der Lokalabdeckungsnachricht spezifiziert sind:
- Bestimmen eines Aktivitätszustands des Benutzergeräts;
- als Folge hiervon, Mitteilen eines Felds der Lokalabdeckungsnachricht, das für die Aktivität des Geräts repräsentativ ist.

2. Verfahren nach Anspruch 1, bei dem der Aktivitätszustand eines Benutzergeräts ein Zustand aus den folgenden Zuständen ist:
- ein aktiver Zustand, in dem das Gerät den Austausch von Signalisierungsdaten und von Nutzlastdaten mit dem Netz benötigt, oder
- ein Bereitschaftszustand, in dem das Gerät nur den Austausch von Signalisierungsdaten mit dem Netz benötigt, oder
- ein inaktiver Zustand, in dem das Gerät weder den Austausch von Nutzlastdaten noch den Austausch von Signalisierungsdaten mit dem Netz benötigt.

3. Verfahren nach Anspruch 1, bei dem das Modifizieren wenigstens eines Funktionsparameters eines lokalen Zugangspunkts des Clusters das Aktivieren, das In-Bereitschaft-Versetzen oder das Deaktivieren des lokalen Zugangspunkts umfasst.

4. Verfahren nach einem der Ansprüche 1 bis 3, bei dem ein Benutzergerät als in einer Abdeckungszone der Mikrozelle vorhanden bestimmt wird, die einem lokalen Zugangspunkt zugeordnet ist, wenn es in der Lage ist, Daten mit dem Zugangspunkt mit einem gegebenen Servicequalitätsniveau auszutauschen.

5. Verfahren nach einem der Ansprüche 1 bis 4, **dadurch gekennzeichnet, dass** es für zwei Abdeckungszonen der Mikrozelle durchgeführt wird, die einem lokalen Zugangspunkt zugeordnet sind, nämlich einer ersten Abdeckungszone (Cp) für den Austausch von Daten mit dem Zugangspunkt unter Respektierung eines ersten Servicequalitätsniveaus, und einer zweiten Abdeckungszone (Cs) für den Austausch von Daten mit dem Zugangspunkt unter Respektierung eines zweiten Servicequalitätsniveaus.

6. Verfahren nach Anspruch 5, bei dem das erste Servicequalitätsniveau ein Niveau für den Austausch von Nutzlastdaten ist, und das zweite Servicequalitätsniveau ein Niveau für den Austausch von Signalisierungsdaten ist.

7. Verfahren nach einem der Ansprüche 1 bis 6, bei dem das Cluster mit einem einzigen lokalen Zugangspunkt gebildet ist.

8. Verfahren nach einem der Ansprüche 1 bis 6, bei dem das Netz eine Mehrzahl von lokalen Zugangspunkten umfasst, die in wenigstens einem Cluster von lokalen Zugangspunkten verteilt sind, umfassend die Erstellung einer Globalabdeckungsnachricht für jedes Cluster von lokalen Zugangspunkten und, für jedes Cluster von lokalen Zugangspunkten, das Modifizieren wenigstens eines Funktionsparameters wenigstens eines lokalen Zugangspunkts des Clusters als Funktion der Globalabdeckungsnachricht.

9. Verfahren nach Anspruch 8, bei dem die Mehrzahl von lokalen Zugangspunkten in einer Makrozelle vorhanden ist, die einer Basisstation des Netzes zugeordnet ist.

10. Verfahren nach einem der vorhergehenden Ansprüche, ferner umfassend, für jeden lokalen Zugangspunkt, die folgenden Schritte für jedes der Benutzergeräte, die in der Lokalabdeckungsnachricht spezifiziert sind:
- Bestimmen einer Benutzungskontextinformation des Geräts;
- als Folge hiervon Mitteilen eines Felds der Lokalabdeckungsnachricht, das für den Benutzungskontext repräsentativ ist.

## Claims

1. Method of allocating resources in a cellular radio communication network comprising a plurality of user equipments (UE1-UE6, UE10-UE16) and a cluster composed of at least one local access point (AP1-AP8, AP) to the network covering a microcell (Mc), including the following steps:
- for each local access point (AP1-AP8, AP) in the cluster:
▪ determining the presence of user equipments (T1-T6) in a coverage zone (C1-C8, Cp, Cs) of the microcell associated with the local access point (AP1-AP8, AP);
▪ generating a local coverage message specifying equipments determined as present in the microcell coverage zone;
- genereting a global coverage message by aggregation of the local coverage message of each local access point in the cluster;
- modifying at least one operating parameter of at least one local access point in the cluster as a function of the global coverage message;
**characterized in that** it comprises, for each local access point in the cluster, the following steps performed for each user equipment specified in the local coverage message:
- determining an activity state of the user equipment;
- accordingly entering a field in said local coverage message with data representing the activity of the equipment.

2. Method according to claim 1, in which the activity state of a user equipment is one of the following states:
- an active state in which the equipment requires exchange of signalling data and useful load data with the network, or
- a standby state in which the equipment only requires an exchange of signalling data with the network, or
- an inactive state in which the equipment requires neither an exchange of useful load data nor an exchange of signalling data with the network.

3. Method according to claim 1, in which the modification of at least one operating parameter of a local access point in the cluster includes activation, putting in standby or deactivation of the local access point.

4. Method according to one of claims 1 to 3, in which a user equipment is determined as being present in the coverage zone of the microcell associated with a local access point when it is capable of exchanging data with said access point with a given Quality of Service level.

5. Method according to one of claims 1 to 4, wherein it is performed for two coverage zones of the microcell associated with a local access point, namely a first coverage zone (Cp) for data exchange with the access point satisfying a first Quality of Service level, and a second coverage zone (Cs) for data exchange with the access point satisfying a second Quality of Service level.

6. Method according to claim 5, in which the first Quality of Service level is a level for exchanging useful load data and the second Quality of Service level is a level for exchanging signalling data.

7. Method according to one of claims 1 to 6, in which in which the cluster is composed of a single local access point.

8. Method according to one of claims 1 to 6, in which the network comprises a plurality of local access points distributed in at least one cluster of local access points, comprising the generating a global coverage message for each cluster of local access points, and for each cluster of local access points, modifying at least one operating parameter of at least one local access point in the cluster, as a function of the corresponding global coverage message.

9. Method according to claim 8, in which said plurality of local access points is present in a macrocell associated with a base station in the network.

10. Method according to one of the previous claims, also comprising, for each local access point, the following steps performed for each user equipment specified in the local coverage message:
- determining equipment usage context information;
- accordingly entering a field in said local coverage message with data representing the usage context.
